# EUROPÄISCHE PATENTSCHRIFT

(11) **EP 4 204 281 B1**
(45) Veröffentlichungstag und Bekanntmachung des Hinweises auf die Patenterteilung: **22.10.2025**
(21) Anmeldenummer: 21785865.3
(22) Anmeldetag: 28.09.2021
(51) Int. Cl.: B62D 5/093, B62D 1/22, B62D 5/09, B62D 5/30

(54) **HYDRAULISCHE LENKEINRICHTUNG**
HYDRAULIC STEERING DEVICE
DISPOSITIF DE DIRECTION HYDRAULIQUE

(30) Priorität: 27.10.2020 DE 102020006585
(43) Veröffentlichungstag der Anmeldung: 05.07.2023
(73) Patentinhaber: Hydac New Technologies GmbH, 66280 Sulzbach/ Saar (DE)
(72) Erfinder: BERGMANN, Erhard, 19079 Banzkow (Ortsteil Mirow) (DE); DE LA MOTTE, Markus, 19300 Muchow (DE); FUNK, Helmut, 19372 Karrenzin (DE)
(74) Vertreter: Bartels und Partner, Patentanwälte
(86) Internationale Anmeldenummer: PCT/EP2021/076660
(87) Internationale Veröffentlichungsnummer: WO 2022/089862

(56) Entgegenhaltungen:
- WO-A1-2008/017290
- DE-A1- 102011 016 591
- DE-B3- 102009 013 633

## Beschreibung

Die Erfindung betrifft zwei hydraulische Lenkeinrichtungen mit den Merkmalen der Oberbegriffe der Ansprüche 1 und 12.

Durch EP 2 753 531 B1 ist eine hydraulische Lenkeinrichtung bekannt, die einen Lenkzylinder mit einer Versorgungsanlage hydraulisch verbindet, wobei die Versorgungsanlage mit dem Lenkzylinder über ein Lenkventil zur Ausbildung einer Hauptstromverbindung hydraulisch wirkverbindbar ist und die Versorgungsanlage mit dem Lenkzylinder über eine Stromregelventilanordnung zur Ausbildung einer, die Hauptstromverbindung umgehenden Nebenstromverbindung hydraulisch wirkverbindbar ist, wobei die Stromregelventilanordnung durch ein elektrisches Steuergerät ansteuerbar ist. Die dahingehende Stromregelventilanordnung umfasst einzeln ansteuerbare Ventilgruppen, die jeweils in den Vorlauf und Rücklauf der Nebenstromverbindung geschaltet sind, wobei die Stromregelventilanordnung vier Ventile umfasst, von denen ein Ventil in den Vorlauf Rechtslenkung, ein Ventil in den Rücklauf Linkslenkung, ein Ventil in den Vorlauf Linkslenkung und ein Ventil in den Rücklauf Rechtslenkung geschaltet ist. Dergestalt ist es möglich eventuelle Fehler in der Nebenstromverbindung mittels einer Plausibilitätsprüfung der Ansteuersignale der Ventile und einem Ausgangssignal, insbesondere einem Ansprechen des Lenkzylinders zu entdecken und zu eliminieren. Hierdurch ist ein fehlertolerantes elektrohydraulisches Lenksystem zur Verfügung gestellt, das einerseits nach dem Steer-by-Wire-Prinzip arbeitet und gleichzeitig auch die Möglichkeit eröffnet, bei Fahrzeugen mit Straßenzulassung eingesetzt werden zu können.

Eine vergleichbare hydraulische Lenkeinrichtung ist auch durch die EP 3 470 300 A1 aufgezeigt, die bei entsprechender Ausgestaltung ein Freigabe-Abschaltventil zwischen der Stromregelventilanordnung und dem Lenkzylinder geschaltet, vorsieht. Dergestalt lassen sich Druckverluste an der hydraulischen Lenkeinrichtung reduzieren und eine hydraulische Befördereinrichtung der Versorgungsanlage für den Lenkzylinder muss nicht gegen einen Druck arbeiten. Insbesondere in dem Fall, wenn keine Lenkanforderung an die hydraulische Lenkeinrichtung besteht, kann dergestalt eine Kompensation des Lastdruckes erfolgen.

Des Weiteren offenbart die EP 1 910 151 B1 eine elektrohydraulische Lenkung mit einem über ein Bedienelement ansteuerbaren Lenkaggregat zur Versorgung eines Lenkmotors mit Druckmittel, der über ein in einen Zusatzdruckmittelströmungspfad zwischen einer Druckmittelquelle und dem Lenkmotor angeordnetes, stetig verstellbares und in Abhängigkeit von der Betätigung des Bedienelementes oder in Abhängigkeit von einem externen Signal ansteuerbares Lenkventil mit einer Zusatzdruckmittelmenge versorgbar ist, und mit einem im Zusatzdruckmittelströmungspfad angeordneten Sperrventil, das in eine Sperrstellung bringbar ist, um den Zusatzdruckmittelströmungspfad zum Lenkmotor zu sperren. Es sind Aufnehmer zur Erfassung der Lenkventileinstellung und/oder der Sperrventileinstellung und ein Steuergerät vorgesehen, von dem das von einem Aufnehmer erzeugte Signal ausgewertet wird. Das Steuergerät ist derart ausgelegt, dass bei Ausfall oder Fehlfunktion eines der Ventile das jeweils andere Ventil in seine Sperrstellung verstellbar ist.

Die DE 10 2009 013 633 B3 beschreibt eine gattungsgemäße hydraulische Lenkeinrichtung mit einem Lenkaktuator, der von einem Lenkaggregat ansteuerbar ist und mit einer Stromregelventilanordnung, die gleichfalls der Ansteuerung des Lenkaktuators dient, wobei die Stromregelventilanordnung ein Ablaufventil, das als Stetigventil ausgebildet ist, sowie ein Richtungsventil aufweist, das in seiner unbetätigten Stellung die fluidführende Verbindung zwischen dem Ablaufventil und dem Lenkaktuator sperrt und in seiner betätigten Stellung den Lenkaktuator in der ein oder anderen Lenkrichtung ansteuert.

Weitere hydraulische Lenkeinrichtungen gehen aus der WO 2008/017290 A1 und der DE 10 2011 016 591 A1 hervor.

Ausgehend von diesem Stand der Technik liegt der Erfindung die Aufgabe zugrunde, die bekannten Lösungen unter Beibehalten der vorstehend beschriebenen Vorteile dahingehend weiter zu verbessern, dass unter Einsatz von nur wenigen Ventilkomponenten eine funktionssichere Ansteuerung des Lenkaktuators bei hoher Lenkdynamik erreicht ist.

Eine dahingehende Aufgabe löst eine hydraulische Lenkeinrichtung mit den Merkmalen des Patentanspruches 1 in seiner Gesamtheit.

Gemäß dem Kennzeichen des Anspruchs 1 ist vorgesehen, dass die Versorgungseinrichtung eine Schwenkwinkelpumpe aufweist, die von einem Loadsensing-Druck ansteuerbar ist, der am Lenkaggregat abgegriffen wird, und von einem Steuerdruck beeinflussbar ist, der in einer Zulaufleitung zwischen dem Zulaufventil und dem Richtungsventil abgegriffen ist. Dergestalt lässt sich bedarfsabhängig mit kurzer Reaktionszeit die Versorgung des Lenkaktuators mit dem jeweils benötigten Ansteuerstrom an Fluid herstellen, was wiederum der Lenkdynamik zugutekommt.

Eine weitere Lösung der Aufgabe besteht in einer hydraulischen Lenkeinrichtung mit den Merkmalen des Patentanspruches 12.

Gemäß dem Kennzeichen des Anspruchs 12 ist vorgesehen, dass ein Druckbegrenzungsventil an die Zulaufleitung zwischen dem Zulauf- und dem Richtungsventil angeschlossen ist.

Dadurch, dass die Stromregelventilanordnung ein Ablaufventil, das als Stetigventil ausgebildet ist, sowie ein Richtungsventil aufweist, das in seiner unbetätigten Stellung die fluidführende Verbindung zwischen dem Ablaufventil der Stromregelventilanordnung und dem Lenkaktuator sperrt und in seiner betätigten Stellung den Lenkaktuator in der ein oder anderen Lenkrichtung ansteuert, löst ein im Druckmittelzulauf fehlerhaft vorherrschender Versorgungsfluiddruck, beispielsweise aufgrund von fehlerhaft arbeitenden Komponenten der hydraulischen Lenkeinrichtung im Zulauf, keine ungewollte Lenkbewegung aus. So ist der Volumenstrom ausgehend von dem Lenkaktuator in Richtung des Tanks mittels des Ablaufventils der Stromregelventilanordnung regelbar, insbesondere begrenzbar, so dass ein Fluiddruck in dem aktuell mit dem Tank verbundenen Fluidraum des Lenkaktuators geregelt zum Tank hin abgebaut werden kann, wodurch in korrigierender Weise auf die Bewegung des Kolbens des Lenkaktuators und damit auf die Lenkbewegung Einfluss genommen werden kann. Im Gegensatz dazu wirkt sich bei Weglassen des Ablaufventils der Stromregelventilanordnung ein fehlerhaft anstehender Versorgungsdruck in dem Druckmittelzulauf des Lenkaktuators dahingehend aus, dass der eine Fluidraum des Lenkaktuators fehlerhaft mit Druck beaufschlagt wird und unter einer Bewegung des Kolbens des Lenkaktuators der Fluiddruck in dem anderen Fluidraum des Lenkaktuators schlagartig zum Tank hin abgegeben wird, was eine ungewollte gefahrbringende Lenkbewegung zur Folge hat. Im Ergebnis ist mittels der erfindungsgemäßen Lenkeinrichtung unter Einsatz von nur wenigen Ventilkomponenten eine funktionssichere Ansteuerung des Lenkaktuators bei hoher Lenkdynamik erreicht.

Bei einer vorteilhaften Ausführungsform der Lenkeinrichtung ist vorgesehen, dass das Lenkaggregat ein weiteres Ablaufventil aufweist. Durch das weitere Ablaufventil ist der Volumenstrom ausgehend von dem Lenkaktuator über das Lenkaggregat in Richtung des Tanks regelbar, insbesondere begrenzbar, so dass ein Fluiddruck in dem aktuell mit dem Tank verbundenen Fluidraum des Lenkaktuators auch über das Lenkaggregat geregelt zum Tank hin abgebaut werden kann. Dadurch ist weiterhin ungewollten gefahrbringenden Lenkbewegungen entgegengewirkt.

Bei einer vorteilhaften Ausführungsform der Lenkeinrichtung ist vorgesehen, dass die Stromregelventilanordnung ein Zulaufventil aufweist, das als Stetigventil ausgebildet ist, und dass das Richtungsventil in der unbetätigten Stellung die Verbindung zwischen dem Zulaufventil und dem Lenkaktuator sperrt. Dadurch ist mit nur wenigen Ventilkomponenten, die ausfallsicher betreibbar sind, ein funktionssicherer Lenkbetrieb erreicht. Dies gilt insbesondere bei einer fehlerhaft offenen Stellung des Zulaufventils, weil in diesem Fall zumindest eines der Ablaufventile die Stromregelfunktion übernimmt, so dass es zu keiner gefahrbringenden Lenkbewegung kommt. Darüber hinaus lassen sich bei geschaltetem Richtungsventil die als Stetigventile konzipierten Zulauf- und Ablaufventile mit hoher Dynamik ansteuern, was insgesamt einer verbesserten Lenkdynamik zugutekommt. Etwaige Fehlstellungen der Lenkung, beispielsweise durch Leckageverluste hervorgerufen, lassen sich mit der Ventilanordnung der Lenkeinrichtung kompensieren.

Dahingehend kann bevorzugt vorgesehen sein, dass zur Ansteuerung des Loadsensing-Druckes für die Schwenkwinkelpumpe ein weiteres Stetigventil dient, das auf gegenüberliegenden Steuerseiten zum einen dem Steuerdruck in einer Steuerleitung und zum anderen einem weiteren Steuerdruck in der Zufuhrleitung zur Schwenkwinkelpumpe ausgesetzt ist.

Die zum Einsatz kommenden Stetigventile sind bevorzugt als Proportionalventile ausgestaltet und das Richtungsventil als Schaltventil, insbesondere mit drei Schaltstellungen.

Bei einer bevorzugten Ausführungsform der erfindungsgemäßen Lenkeinrichtung ist an zumindest eine an das Richtungsventil angeschlossene Fluidleitung, insbesondere an die Zulaufleitung zwischen dem Zulauf- und dem Richtungsventil, jeweils eine Druckerfassungseinrichtung angeschlossen. Die mittels der Druckerfassungseinrichtung gesammelten Druckwerte dienen zur Ermittlung der Schaltposition des Richtungsventils. Die Erfassung der Schaltposition über die Druckerfassungseinrichtung ist gegenüber einer Erfassung der Schaltposition mittels Wegaufnehmern oder Endlagenschaltern technisch einfacher realisierbar.

Bei einer weiteren bevorzugten Ausführungsform der erfindungsgemäßen Lenkeinrichtung ist das Lenkaggregat und die Stromregelventilanordnung in hydraulisch paralleler Anordnung zueinander verschaltet, die dergestalt den Lenkaktuator bedarfsweise gemeinsam ansteuern, wobei das Lenkaggregat eine Art Hauptstromversorgung und die Stromregelventilanordnung eine Art Nebenstromversorgung für das Lenkaggregat darstellen. Dergestalt werden in bevorzugter Weise in die Verbindungsleitungen zwischen dem Richtungsventil und dem Lenkaktuator die Steuerleitungen des Lenkaggregates eingebracht. So kann für rasche, dynamische Lenkbewegungen bei höheren Geschwindigkeiten, die Stromregelventilanordnung als Zusatzversorgung zu der eigentlichen Versorgung über das Lenkaggregat zugeschaltet werden.

Weitere Vorteile der erfindungsgemäßen Lösung sind Gegenstand der Unteransprüche.

Im Folgenden wird die erfindungsgemäße Lenkeinrichtung anhand der Zeichnung näher erläutert. Dabei zeigen in prinzipieller und nicht maßstäblicher Darstellung die
- Fig. 1: in der Art eines hydraulischen Schaltplans die erfindungsgemäße Lenkeinrichtung; und
- Fig. 2: in der Art eines Blockschaltbildes eine Steuereinheit der Lenkeinrichtung aus Fig. 1.

Die hydraulische Lenkeinrichtung weist einen Lenkaktuator 10 sowie ein Lenkaggregat 12 und eine Stromregelventilanordnung 14 auf, die jeweils zum Ansteuern des Lenkaktuators 10 dienen. Das Lenkaggregat 12 entspricht hinsichtlich seines Aufbaus und seiner Funktion der aus dem Stand der Technik nach DE 10 2007 033 986 A1 oder DE 10 2011 016 591 A1 bekannten Lösung.

Die Stromregelventilanordnung 14 weist ein Zu- V1 und ein Ablaufventil V2 sowie ein Richtungsventil V3 auf, das in seiner unbetätigten Stellung die jeweilige fluidführende Verbindung zwischen dem Zu- V1 bzw. dem Ablaufventil V2 der Stromregelventilanordnung 14 und dem Lenkaktuator 10 sperrt und in seiner betätigten Stellung den Lenkaktuator 10 in der ein oder anderen Richtung ansteuert. Das Zu- V1 und das Ablaufventil V2 der Stromregelventilanordnung 14 sind jeweils als Stetigventil 16 ausgebildet.

Zur gemeinsamen Versorgung der Stromregelventilanordnung 14 und des Lenkaggregats 12 mit Druckfluid ist eine Versorgungseinrichtung 22 vorgesehen, die als Axialkolbenpumpe 24, auch Schwenkwinkelpumpe genannt, ausgebildet ist zur Umsetzung von mechanischer Energie (Drehmoment, Drehzahl) in hydraulische Energie (Volumenstrom, Druck) in Abhängigkeit eines vorgebbaren Schwenkwinkels. Die Pumpe 24 ist hochdruckseitig über eine erste Fluidleitung 26 an einen Druckversorgungsanschluss P der Stromregelventilanordnung 14 angeschlossen.

Der Druckversorgungsanschluss P der Stromregelventilanordnung 14 ist über eine zweite Fluidleitung 28 mit einem ersten Anschluss V1.1 des Zulaufventils V1 fluidführend verbunden, dessen zweiter Anschluss V1.2 über eine dritte Fluidleitung 30 an einen ersten Anschluss V3.1 des Richtungsventiles V3 angeschlossen ist. Der zweite Anschluss V3.2 des Richtungsventils V3 ist über eine vierte Fluidleitung 32 mit einem Anschluss L der Stromregelventilanordnung 14 zum Anschließen des Lenkaktuators 10 fluidführend verbunden. Ein Anschluss R der Stromregelventilanordnung 14 ebenfalls zum Anschließen des Lenkaktuators 10 ist über eine fünfte Fluidleitung 34 mit dem vierten Anschluss V3.4 des Richtungsventils V3 fluidführend verbunden, dessen dritter Anschluss V3.3 über eine sechste Fluidleitung 36 an einen ersten Anschluss V2.1 des Ablaufventils V2 der Stromregelventilanordnung 14 angeschlossen ist. Der zweite Anschluss V2.2 des Ablaufventils V2 der Stromregelventilanordnung 14 ist über eine siebte Fluidleitung 38 an einen Tankanschluss T der Stromregelventilanordnung 14 angeschlossen.

Der Tankanschluss T der Stromregelventilanordnung 14 ist über eine achte Fluidleitung 40 an einen Tank 54 angeschlossen, aus dem die Axialkolbenpumpe 24 Fluid ansaugt.

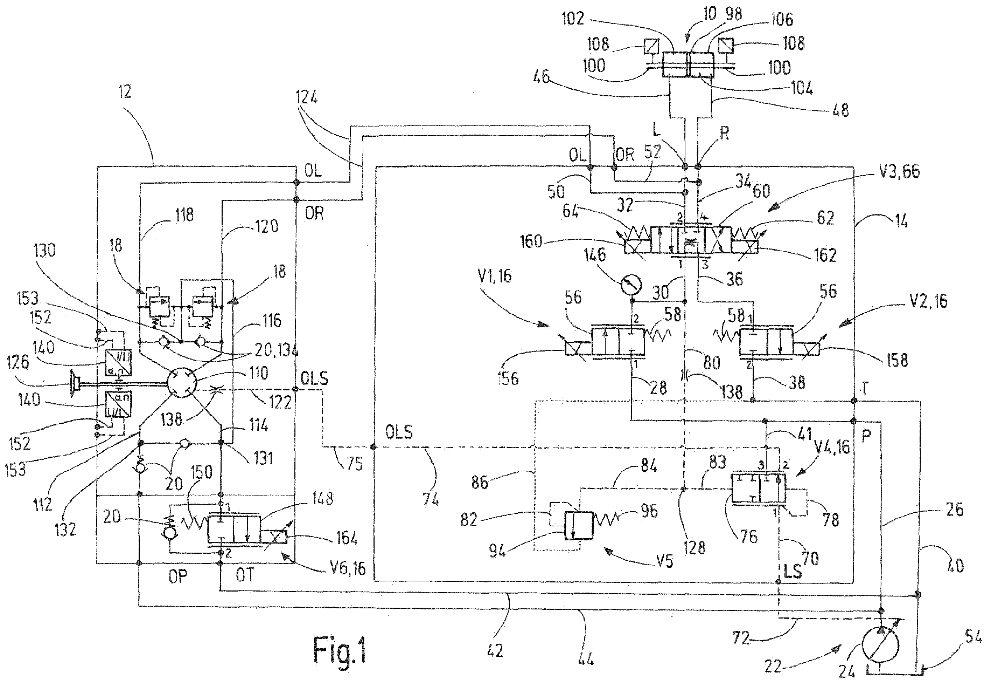

Das Zu- V1 und das Ablaufventil V2 der Stromregelventilanordnung 14 weisen jeweils einen Ventilkolben 56 auf, der von einer jeweiligen ersten Druckfeder 58 in Richtung seiner in der Fig. 1 gezeigten ersten Endstellung beaufschlagt ist und entgegen der Kraft dieser ersten Druckfeder 58 von seiner ersten Endstellung elektromagnetisch betätigt in seine zweite Endstellung bringbar ist. Ist der jeweilige Ventilkolben 56 des Zu- V1 und Ablaufventiles V2 der Stromregelventilanordnung 14 in seiner ersten Endstellung angeordnet, trennt dieser den ersten V1.1, V2.1 und den zweiten V1.2, V2.2 Anschluss des jeweiligen Ventils V1, V2 voneinander, wohingegen dieser Ventilkolben 56 in seiner zweiten Endstellung angeordnet, den ersten V1.1, V2.1 und den zweiten V2.1, V2.2 Anschluss des jeweiligen Ventils V1, V2 fluidführend miteinander verbindet.

Der Ventilkolben 60 des Richtungsventils V3 ist auf seiner einen und anderen Seite von einer zweiten 62 bzw. dritten 64 Druckfeder beaufschlagt, in seiner in der Fig. 1 gezeigten ersten Schaltstellung gehalten. Entgegen der Kraft der zweiten 62 und dritten 64 Druckfeder ist der Ventilkolben 60 des Richtungsventils V3 von seiner ersten Schaltstellung jeweils elektromagnetisch betätigt in seine zweite bzw. dritte Schaltstellung bringbar. In der ersten Schaltstellung angeordnet, trennt der Ventilkolben 60 des Richtungsventils V3 die Anschlüsse V3.2 und V3.4 jeweils von sämtlichen anderen Anschlüssen V3.1, V3.2, V3.3, V3.4 des Richtungsventils V3 und verbindet die Anschlüsse V3.1 und V3.3 über eine Drossel- oder Blendenstelle fluidführend miteinander. Ist der Ventilkolben 60 des Richtungsventils V3 in seiner zweiten Schaltstellung angeordnet, ist der erste V3.1 und der zweite V3.2 Anschluss des Richtungsventils V3 über einen Fluidweg sowie dessen vierter V3.4 und dritter V3.3 Anschluss über einen weiteren Fluidweg fluidführend miteinander verbunden. In der dritten Schaltstellung des Ventilkolbens 60 des Richtungsventils V3 verbindet der Ventilkolben 60 den ersten Anschluss V3.1 des Richtungsventils V3 mit dessen viertem Anschluss V3.4 über einen Fluidweg und den zweiten Anschluss V3.2 des Richtungsventils V3 mit seinem dritten Anschluss V3.3 über einen weiteren Fluidweg. Das Richtungsventil V3 ist ein 4/3-Wege-Schaltventil 66.

An die dritte Fluidleitung 30 zwischen dem Zulaufventil V1 und dem Richtungsventil V3 ist eine Druckerfassungseinrichtung 146 in Form eines Manometers angeschlossen. Die mittels der Druckerfassungseinrichtung 146 gesammelten Druckwerte dienen zumindest zur Ermittlung der Schaltposition des Richtungsventils V3.

Es ist ein weiteres Stetigventil V4 vorgesehen, dessen erster Anschluss V4.1 über eine erste Loadsensing-Leitung 70 zum Führen eines Loadsensing-Drucks an einen Loadsensing-Anschluss LS der Stromregelventilanordnung 14 angeschlossen ist, der zum Beeinflussen des Schwenkwinkels der Axialkolbenpumpe 24 über eine zweite Loadsensing-Leitung 72 zum Führen des Loadsensing-Drucks fluidführend mit dieser verbunden ist. Ein zweiter Anschluss V4.2 des weiteren Stetigventils V4 ist über eine dritte Loadsensing-Leitung 74 mit einem Anschluss OLS der Stromregelventilanordnung 14 verbunden zum Anschließen eines Loadsensing- bzw. Lastsignal-Ausgangs OLS des Lenkaggregats 12 über eine vierte Loadsensing-Leitung 75. Ein dritter Anschluss V4.3 des weiteren Stetigventils V4 ist über eine neunte Fluidleitung 41 an die zweite Fluidleitung 28 angeschlossen.

In Richtung der in der Fig. 1 gezeigten ersten Endstellung eines Ventilkolbens 76 des weiteren Stetigventils V4 wirkt auf diesen der weitere Fluid- bzw. Steuerdruck in der ersten Loadsensing-Leitung 70 zwischen dem weiteren Stetigventil V4 und dem Loadsensing-Anschluss LS, der in der ersten Loadsensing-Leitung 70 abgegriffen, über eine erste Steuerleitung 78 zu dem weiteren Stetigventil V4 geführt ist. In Richtung der zweiten Endstellung des Ventilkolbens 76 des weiteren Stetigventils V4 wirkt auf diesen der Fluid- bzw. Steuerdruck in der dritten Fluidleitung 30 zwischen dem Zulaufventil V1 und dem Richtungsventil V3, der in der dritten Fluidleitung 30 abgegriffen, über eine zweite Steuerleitung 80 zu einem ersten Verzweigungspunkt 128 geführt ist, der über eine dritte Steuerleitung 83 mit dem weiteren Stetigventil V4 verbunden ist. In die zweite Steuerleitung 80 ist eine Drossel oder Blende 138 geschaltet. Ist der Ventilkolben 76 des weiteren Stetigventils V4 in seiner ersten Endstellung angeordnet, sind der erste V4.1 und der zweite V4.2 Anschluss des weiteren Stetigventils V4 über einen Fluidweg fluidführend miteinander verbunden, wohingegen bei Anordnung des Ventilkolbens 76 in seiner zweiten Endstellung der erste V4.1 und zweite V4.2 Anschluss voneinander getrennt sind. Der dritte Anschluss V4.3 des weiteren Stetigventils V4 ist in beiden Endstellungen von den anderen Anschlüssen V4.1 und V4.2 getrennt.

Das Zulaufventil V1 und das Ablaufventil V2 der Stromregelventilanordnung 14 ist jeweils als 2/2-Wege-Proportionalventil und das weitere Stetigventil V4 ist als 3/2-Wege-Proportionalventil ausgebildet. Eine Ausbildung des weiteren Stetigventils V4 als 2/2-Wege-Proportionalventil ist jedoch auch denkbar.

An die achte Tank-Fluidleitung 40 ist über eine zehnte Fluidleitung 42 ein Tank-Ausgang OT des Lenkaggregats 12 angeschlossen.

Ein Druckbegrenzungsventil V5 ist über eine vierte Steuerleitung 84 eingangsseitig an den ersten Verzweigungspunkt 128 und ausgangsseitig über eine fünfte Steuerleitung 86 an den Tankanschluss T angeschlossen. Auf die eine Seite eines Ventilkolbens 94 des Druckbegrenzungsventils V5 wirkt der Fluiddruck in der vierten Steuerleitung 84, der über eine sechste Steuerleitung 82 auf die eine Seite des Ventilkolbens 94 des Druckbegrenzungsventils V5 geführt ist. Die andere Seite des Ventilkolbens 94 des Druckbegrenzungsventils V5 ist beaufschlagt von der Kraft einer weiteren Druckfeder 96.

An die erste Druckversorgungs-Fluidleitung 26 ist über eine elfte Fluidleitung 44 ein Druckversorgungs-Eingang OP des Lenkaggregats 12 angeschlossen.

Der Lenkaktuator 10 ist als einzelner Gleichgangzylinder, auch Gleichlaufzylinder genannt, ausgebildet, der auf beiden Seiten seines Kolbens 98 jeweils eine Kolbenstange 100 als Teil eines in der Figur nicht dargestellten Lenkgetriebes für einzuschlagende Fahrzeugräder eines Fahrzeuges aufweist. Der Lenkaktuator 10 kann auch aus zwei miteinander kreuzverbundenen Differentialzylindern gebildet sein. Der Kolben 98 trennt einen ersten 102 von einem zweiten 104 Fluidraum im Gehäuse 106 des Lenkaktuators 10. Der Lenkaktuator 10 ist mit einer üblichen Positionsüberwachung 108 versehen, die zur Überwachung der Verfahrstellung seines Kolbens 98 dient. Der erste 102 und zweite 104 Fluidraum des Lenkaktuators 10 sind über eine zwölfte Fluidleitung 46 an den Anschluss L bzw. eine dreizehnte Fluidleitung 48 an den Anschluss R der Stromregelventilanordnung 14 angeschlossen.

Die Stromregelventilanordnung 14 weist des Weiteren Anschlüsse OL und OR auf, die über eine vierzehnte Fluidleitung 50 an die vierte Fluidleitung 32 zwischen dem zweiten Anschluss V3.2 des Richtungsventils V3 und dem Anschluss L der Stromregelventilanordnung 14 bzw. über eine fünfzehnte Fluidleitung 52 an die fünfte Fluidleitung 34 zwischen dem vierten Anschluss V3.4 des Richtungsventils V3 und dem Anschluss R der Stromregelventilanordnung 14 angeschlossen sind.

Das Lenkaggregat 12 besteht im Wesentlichen aus einem Rotorsatz (Dosierpumpe 110) und einem handbetätigten Servoventil 110 in Drehschieberbauart. Derartige Lenkaggregate 12 (Orbitrol) sind Stand der Technik, so dass auf eine detaillierte Beschreibung des Aufbaus des handbetätigten Servoventils 110 und der Dosierpumpe 110, die nach dem Gerotorprinzip arbeitet, verzichtet wird.

Bei dem in der Fig. 1 dargestellten Schaltbild sind das handbetätigte Servoventil 110 und die Dosierpumpe 110 durch das kreisförmige Symbol für ein Orbitrol angedeutet. Die Dosierpumpen-Servoventil-Einheit 110 ist über einen Druckversorgungskanal 112 und einen ersten Tankkanal 114 im Lenkaggregat 12 mit dem Druckversorgungs- OP bzw. dem Tankanschluss OT des Lenkaggregats 12 sowie über einen ersten 118 und zweiten 120 Arbeitskanal im Lenkaggregat 12 mit den Anschlüssen OL bzw. OR des Lenkaggregats 12 fluidführend verbunden, die jeweils über eine Fluidleitung 124 mit den entsprechenden Anschlüssen OL, OR der Stromregelventilanordnung 14 fluidführend verbunden sind. Durch diese Ausgestaltung ist bei Betätigung eines mechanisch mit der Dosierpumpe 110 verbundenen Handlenkrades 126 in Abhängigkeit von dessen Drehrichtung Druckmittel in den einen 102, 104 oder anderen 104, 102 Fluidraum gefördert und strömt entsprechend Druckmittel aus dem jeweils anderen Fluidraum 102, 104 zum Tank 54 hin ab.

An den ersten 118 und zweiten 120 Arbeitskanal ist jeweils eingangsseitig ein weiteres Druckbegrenzungsventil 18 angeschlossen, die beide ausgangsseitig an einen zweiten Verzweigungspunkt 130 angeschlossen sind. Zwischen dem ersten 118 bzw. zweiten 120 Arbeitskanal und dem zweiten Verzweigungspunkt 130 ist jeweils, in Parallelschaltung zu dem jeweiligen weiteren Druckbegrenzungsventil 18, ein Nachsaugventil 134 in Form eines Rückschlagventils 20 geschaltet, das in Richtung des ersten 118 bzw. zweiten 120 Arbeitskanals öffnet. Der zweite Verzweigungspunkt 130 ist über einen zweiten Tankkanal 116 an einen dritten Verzweigungspunkt 131 in dem ersten Tankkanal 114 angeschlossen. Über die beiden weiteren Druckbegrenzungsventile 18 werden die beiden mit dem Lenkaktuator 10 verbundenen Anschlüsse OL, OR abgesichert. Spricht eines der weiteren Druckbegrenzungsventile 18 an, so wird das Druckfluid über das Nachsaugventil 134 der Niederdruckseite der Gegenseite zugeführt. Zudem kann über die beiden Nachsaugventile 134 Druckmittel aus dem Tank 54 nachgesaugt werden.

Es ist ein Loadsensing-Kanal 122 zwischen dem Tankanschluss der Dosierpumpen-Servoventil-Einheit 110 und dem Anschluss OLS des Lenkaggregates 12 vorgesehen, in den eine Blende 138 oder Drossel geschaltet ist. Der Anschluss OLS des Lenkaggregates 12 ist fluidführend über die Loadsensing-Leitung 75 mit dem entsprechenden Anschluss OLS der Stromregelventilanordnung 14 verbunden. Der Druckversorgungskanal 112 und der erste Tankkanal 114 sind über ein Rückschlagventil 20 miteinander verbunden, das eingangsseitig an den dritten Verzweigungspunkt 131 in dem ersten Tankkanal 114 sowie ausgangsseitig an einen vierten Verzweigungspunkt 132 in dem Druckversorgungskanal 112 angeschlossen ist und in dessen Richtung öffnet. Auch in dem Druckversorgungskanal 112 des Lenkaggregats 12 ist zwischen dem vierten Verzweigungspunkt 132 und dem Anschluss OP des Lenkaggregats 12 ein Rückschlagventil 20 vorgesehen, das entgegen der Kraft einer weiteren Druckfeder in Richtung des zweiten Verzweigungspunktes 132 öffnet.

In dem ersten Tankkanal 114 ist zwischen dem dritten Verzweigungspunkt 131 und dem Tank-Ausgang OT ein weiteres Ablaufventil des Lenkaggregats 12 in Form eines Stromregelventils V6 zum Regeln des Tankvolumenstroms vorgesehen, das als Stetigventil in Form eines 2/2-Wege-Proportionalventils ausgebildet ist. Das Stromregelventil V6 weist einen Ventilkolben 148 auf, der von einer weiteren Druckfeder 150 in Richtung seiner in der Fig. 1 gezeigten ersten Endstellung beaufschlagt ist und entgegen der Kraft dieser weiteren Druckfeder 150 von seiner ersten Endstellung elektromagnetisch betätigt in seine zweite Endstellung bringbar ist. Ist der Ventilkolben 148 des Stromregelventils V6 in seiner ersten Endstellung angeordnet, trennt dieser den ersten V6.1 und den zweiten V6.2 Anschluss des Stromventils V6 voneinander, wohingegen dieser Ventilkolben 148 in seiner zweiten Endstellung angeordnet, den ersten V6.1 und den zweiten V6.2 Anschluss des Stromregelventils V6 fluidführend miteinander verbindet. Der Tankvolumenstrom des Orbitrols wird in Abhängigkeit der Handlenkraddrehzahl mittels des Stromregelventils V6 (failure impact valve) begrenzt, so dass ein im Fehlerfall maximal offenes Zulaufventil V1 sich nicht auf die Lenkgeschwindigkeit auswirkt.

Das Zu- V1, das Ablauf- V2, das Richtungs- V3 und das Stromregelventil V6 sind im unbestromten Zustand 156, 158, 160, 162, 164 in ihrer ersten Stellung angeordnet.

Parallel zu dem Stromregelventil V6 ist in den ersten Tankkanal 114 zwischen dem dritten Verzweigungspunkt 131 und dem Tank-Ausgang OT ein Rückschlagventil 20 zum Nachsaugen von Fluid aus dem Tank T geschaltet, das entgegen einer weiteren Druckfeder in Richtung des dritten Verzweigungspunktes 131 öffnet.

Zur Ermittlung der Lenkbewegung am Handlenkrad 126 ist ein Lenkwinkel-Sollwertgeber 140 vorgesehen.

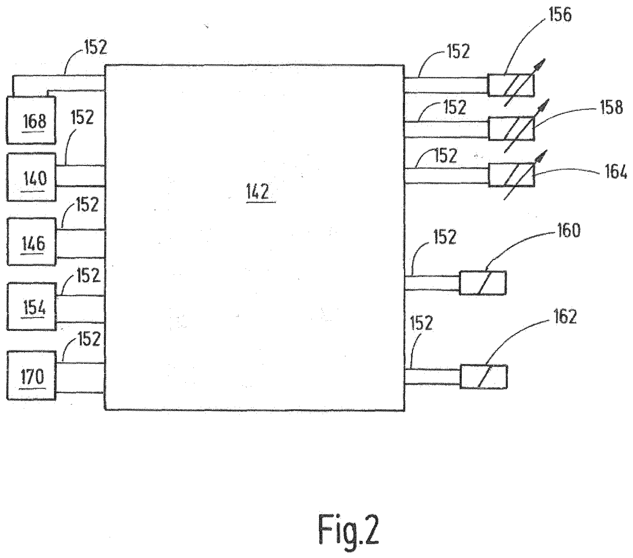

Es ist eine Steuereinheit 142 (Fig. 2) für die Lenkeinrichtung vorgesehen, an die jeweils über zumindest eine elektrische Leitung 152 eingangsseitig der Lenkwinkel-Sollwertgeber 140, die Druckerfassungseinrichtung 146, eine Eingabeeinrichtung in Form eines Joysticks 154 und gegebenenfalls die Positionsüberwachung 108 des Lenkaktuators 10 sowie ausgangsseitig die jeweilige elektromagnetische Betätigungseinrichtung 156, 158, 160, 162, 164 des Zu- V1, des Ablauf- V2, des Richtungs- V3 und des Stromregelventils V6 angeschlossen ist. Unter Verwendung der durch die Druckerfassungseinrichtung 146 gesammelten Werte ist von der Steuereinheit 142 die Schaltstellung des Richtungsventils V3 ermittelbar.

Im Ergebnis steuern das Lenkaggregat 12 und die Stromregelventilanordnung 14, in hydraulischer Parallelanordnung zueinander verschaltet, den Lenkaktuator 10 an, wobei das Lenkaggregat 12 eine Art Hauptstromversorgung und die Stromregelventilanordnung 14 eine Art Nebenstromversorgung für den Lenkaktuator 10 darstellen.

Weiterhin ermöglichen die Druckerfassungseinrichtung 146 und die Ausführung des Richtungsventils V3 mit einer fluidführenden Verbindung zwischen seinem ersten V3.1 und dritten V3.3 Anschluss in seiner ersten Schaltstellung eine Funktionsüberprüfung des Zulauf- V1, Ablauf- V2 und Richtungsventils V3 während eines Start-up-Tests mit folgenden Verfahrensschritten:
- Lenkende (kein Lenken, Fahrzeuggeschwindigkeit < 0,5 km/h);
- Ablaufventil V2 der Stromregelventilanordnung 14 wird 10 % angesteuert, wobei der von der Druckerfassungseinrichtung 146 ermittelte Druck auf Tankdruck abfällt (System ist entlastet);
- Ablaufventil V2 der Stromregelventilanordnung 14 wird geschlossen, woraufhin der von der Druckerfassungseinrichtung 146 ermittelte Druck nicht ansteigen darf, woraus sich ableiten lässt, dass die erste Endstellung des Zulaufventils V1 funktionstüchtig ist;
- Zulaufventil V1 wird angesteuert bis der von der Druckerfassungseinrichtung 146 ermittelte Druck gleich 50 bar ist, woraus sich ableiten lässt, dass das Zulaufventil V1 funktionstüchtig ist;
- Zulaufventil V1 wird geschlossen, wobei der von der Druckerfassungseinrichtung 146 ermittelte Druck nicht abfallen darf, woraus sich ableiten lässt, dass die jeweilige erste Endstellung des Richtungsventils V3 und des Ablaufventils V2 der Stromregelventilanordnung 14 funktionstüchtig ist; und
- Ablaufventil V2 der Stromregelventilanordnung 14 wird 10 % angesteuert, woraufhin der von der Druckerfassungseinrichtung 146 ermittelte Druck auf Tankdruck abfällt, woraus sich ableiten lässt, dass das Ablaufventil V2 der Stromregelventilanordnung 14 funktionstüchtig ist.

## Patentansprüche

1. Hydraulische Lenkeinrichtung mit einem Lenkaktuator (10), der von einem Lenkaggregat (12) ansteuerbar ist und mit einer Stromregelventilanordnung (14), die gleichfalls der Ansteuerung des Lenkaktuators (10) dient, wobei die Stromregelventilanordnung (14) ein Ablaufventil (V2), das als Stetigventil (16) ausgebildet ist, sowie ein Richtungsventil (V3) aufweist, das in seiner unbetätigten Stellung die fluidführende Verbindung zwischen dem Ablaufventil (V2) und dem Lenkaktuator (10) sperrt und in seiner betätigten Stellung den Lenkaktuator (10) in der ein oder anderen Lenkrichtung ansteuert, **dadurch gekennzeichnet, dass** die Versorgungseinrichtung (22) eine Schwenkwinkelpumpe (24) aufweist, die von einem Loadsensing-Druck ansteuerbar ist, der am Lenkaggregat (12) abgegriffen wird, und von einem Steuerdruck beeinflussbar ist, der in einer Zulaufleitung (30) zwischen einem Zulaufventil (V1) und dem Richtungsventil (V3) abgegriffen ist.

2. Lenkeinrichtung nach Anspruch 1, **dadurch gekennzeichnet, dass** das Lenkaggregat (12) ein weiteres Ablaufventil (V6) aufweist, das bevorzugt als Stetigventil (16), besonders bevorzugt als elektromagnetisch ansteuerbares Proportionalventil ausgebildet ist.

3. Lenkeinrichtung nach Anspruch 1 oder 2, **dadurch gekennzeichnet, dass** die Stromregelventilanordnung (14) ein Zulaufventil (V1) aufweist, das als Stetigventil (16) ausgebildet ist, und dass das Richtungsventil (V3) in der unbetätigten Stellung die Verbindung zwischen dem Zulaufventil (V1) und dem Lenkaktuator (10) sperrt.

4. Lenkeinrichtung nach einem der vorstehenden Ansprüche, **dadurch gekennzeichnet, dass** das Lenkaggregat (12) und die Stromregelventilanordnung (14) von einer gemeinsamen Versorgungseinrichtung (22) versorgt sind.

5. Lenkeinrichtung nach einem der vorstehenden Ansprüche, **dadurch gekennzeichnet, dass** zur Ansteuerung des Loadsensing-Druckes für die Schwenkwinkelpumpe (24) ein weiteres Stetigventil (V4) dient, das auf gegenüberliegenden Steuerseiten zum einen dem Steuerdruck in einer Steuerleitung (80) und zum anderen einem weiteren Steuerdruck in einer Zufuhrleitung (70) zur Schwenkwinkelpumpe (24) ausgesetzt ist.

6. Lenkeinrichtung nach einem der vorstehenden Ansprüche, **dadurch gekennzeichnet, dass** ein Druckbegrenzungsventil (V5) an die Zulaufleitung (30) zwischen dem Zulauf- (V1) und dem Richtungsventil (V3) angeschlossen ist.

7. Lenkeinrichtung nach einem der vorstehenden Ansprüche, **dadurch gekennzeichnet, dass** das jeweilige Stetigventil (16) ein elektromagnetisch ansteuerbares Proportionalventil, insbesondere das Zu-(V1) und Ablaufventil (V2) jeweils ein 2/2- und das weitere Stetigventil (V4) ein 3/2-Wege-Proportionalventil, ist.

8. Lenkeinrichtung nach einem der vorstehenden Ansprüche, **dadurch gekennzeichnet, dass** das Richtungsventil (V3) ein elektromagnetisch betätigbares Schaltventil (66), insbesondere ein 4/3-Wege-Schaltventil, ist.

9. Lenkeinrichtung nach einem der vorstehenden Ansprüche, **dadurch gekennzeichnet, dass** an zumindest eine an das Richtungsventil (V3) angeschlossene Fluidleitung, insbesondere an die Zulaufleitung (30) zwischen dem Zulauf- (V1) und dem Richtungsventil (V3), jeweils eine Druckerfassungseinrichtung (146) angeschlossen ist.

10. Lenkeinrichtung nach einem der vorstehenden Ansprüche, **dadurch gekennzeichnet, dass** in die Verbindungsleitungen (32, 34) zwischen dem Richtungsventil (V3) und dem Lenkaktuator (10), vorzugsweise in Form eines Gleichgangzylinders, die Steuerleitungen (50, 52) des Lenkaggregates (12) einmünden.

11. Lenkeinrichtung nach einem der vorstehenden Ansprüche, **dadurch gekennzeichnet, dass** das Lenkaggregat (12) und die Stromregelventilanordnung (14) in hydraulischer Parallelanordnung zueinander verschaltet, den Lenkaktuator (10) ansteuern und dass das Lenkaggregat (12) eine Art Hauptstromversorgung und die Stromregelventilanordnung (14) eine Art Nebenstromversorgung für den Lenkaktuator (10) darstellen.

12. Hydraulische Lenkeinrichtung mit einem Lenkaktuator (10), der von einem Lenkaggregat (12) ansteuerbar ist und mit einer Stromregelventilanordnung (14), die gleichfalls der Ansteuerung des Lenkaktuators (10) dient, wobei die Stromregelventilanordnung (14) ein Ablaufventil (V2), das als Stetigventil (16) ausgebildet ist, sowie ein Richtungsventil (V3) aufweist, das in seiner unbetätigten Stellung die fluidführende Verbindung zwischen dem Ablaufventil (V2) und dem Lenkaktuator (10) sperrt und in seiner betätigten Stellung den Lenkaktuator (10) in der ein oder anderen Lenkrichtung ansteuert, **dadurch gekennzeichnet, dass** ein Druckbegrenzungsventil (V5) an eine Zulaufleitung (30) zwischen einem Zulauf- (V1) und dem Richtungsventil (V3) angeschlossen ist.

## Claims

1. Hydraulic steering device having a steering actuator (10) that can be controlled by a steering unit (12) and having a flow-regulating valve arrangement (14) that also serves to control the steering actuator (10), said flow-regulating valve arrangement (14) comprising a discharge valve (V2), which is configured as a continuous control valve (16), and also a directional valve (V3), which, in its unactuated position, blocks the fluid-conveying connection between the discharge valve (V2) and the steering actuator (10) and, in its actuated position, controls the steering actuator (10) in one or the other steering direction **characterised in that** the supply device (22) comprises a swivel angle pump (24), which can be controlled by a load-sensing pressure that can be recorded on the steering unit (12), and which can be influenced by a control pressure, which is recorded in a feed line (30) between the inlet valve (V1) and the directional valve (V3).

2. Steering device according to claim 1, **characterised in that** the steering unit (12) comprises a further discharge valve (V6), which is preferably configured as a continuous control valve (16), more preferably as an electromagnetically actuatable proportional valve.

3. Steering device according to either claim 1 or claim 2, **characterised in that** the flow-regulating valve arrangement (14) comprises an inlet valve (V1) that is configured as a continuous control valve (16), and **in that** the directional valve (V3), in the unactuated position, blocks the connection between the inlet valve (V1) and the steering actuator (10).

4. Steering device according to any of the preceding claims, **characterised in that** the steering unit (12) and the flow-regulating valve arrangement (14) are supplied by a common supply device (22).

5. Steering device according to any of the preceding claims, **characterised in that** a further continuous control valve (V4) is used to control the load-sensing pressure for the swivel angle pump (24), said valve being subjected on opposite control sides on the one hand to the control pressure in a control line (80) and on the other hand to a further control pressure in a feed line (70) to the swivel angle pump (24).

6. Steering device according to any of the preceding claims, **characterised in that** a pressure-limiting valve (V5) is connected to the feed line (30) between the inlet valve (V1) and the directional valve (V3).

7. Steering device according to any of the preceding claims, **characterised in that** the respective continuous control valve (16) is an electromagnetically actuatable proportional valve, in particular the inlet valve (V1) and the discharge valve (V2) is in each case a 2/2-way proportional valve and the further continuous control valve (V4) is a 3/2-way proportional valve.

8. Steering device according to any of the preceding claims, **characterised in that** the directional valve (V3) is an electromagnetically actuatable switching valve (66), in particular a 4/3-way switching valve.

9. Steering device according to any of the preceding claims, **characterised in that** a pressure-detecting device (146) is in each case connected to at least one fluid line connected to the directional valve (V3), in particular to the feed line (30) between the inlet valve (V1) and the directional valve (V3).

10. Steering device according to any of the preceding claims, **characterised in that** the control lines (50, 52) of the steering unit (12) open into the connecting lines (32, 34) between the directional valve (V3) and the steering actuator (10), preferably in the form of a synchronous cylinder.

11. Steering device according to any of the preceding claims, **characterised in that** the steering unit (12) and the flow-regulating valve arrangement (14) are connected to one another in a hydraulic parallel arrangement to control the steering actuator (10), and **in that** the steering unit (12) represents a kind of main power supply and the flow-regulating valve arrangement (14) represents a kind of auxiliary power supply for the steering actuator (10).

12. Hydraulic steering device having a steering actuator (10) that can be controlled by a steering unit (12) and having a flow-regulating valve arrangement (14) that also serves to control the steering actuator (10), said flow-regulating valve arrangement (14) comprising a discharge valve (V2), which is configured as a continuous control valve (16), and also a directional valve (V3), which, in its unactuated position, blocks the fluid-conveying connection between the discharge valve (V2) and the steering actuator (10) and, in its actuated position, controls the steering actuator (10) in one or the other steering direction, **characterised in that** a pressure-limiting valve (V5) is connected to a feed line (30) between an inlet valve (V1) and the directional valve (V3).

## Revendications

1. Dispositif hydraulique de direction comprenant un actionneur (10) de direction, qui peut être commandé par un groupe (12) de direction et comprenant un agencement (14) de soupape de réglage du courant, qui sert également à la commande de l'actionneur (10) de direction, dans lequel l'agencement (14) de soupape de réglage du courant a une soupape (V2) d'évacuation, qui est constituée en soupape (16) à réglage continu, ainsi qu'une soupape (V3) directionnelle, qui, dans sa position non actionnée, barre la communication fluidique entre la soupape (V2) d'évacuation et l'actionneur (10) de direction et, dans sa position actionnée, commande l'actionneur (10) de direction dans un sens de direction ou dans l'autre, **caractérisé en ce que** le dispositif (22) d'alimentation a une pompe (24) à angle de pivotement, qui peut être commandée par une pression loadsensing prélevée au groupe (12) de direction, et qui peut être influencée par une pression de commande, prélevée dans un conduit (30) d'admission entre une soupape (V1) d'admission et la soupape (V3) directionnelle.

2. Dispositif de direction suivant la revendication 1, **caractérisé en ce que** le groupe (12) de direction a une autre soupape (V6) d'évacuation, qui est constituée, de préférence sous la forme d'une soupape (16) à réglage continu, d'une manière particulièrement préférée, sous la forme d'une soupape proportionnelle pouvant être commandée électromagnétiquement.

3. Dispositif de direction suivant la revendication 1 ou 2, **caractérisé en ce que** l'agencement (14) de soupape de réglage du courant a une soupape (V1) d'admission, qui est constituée sous la forme d'une soupape (16) à réglage continu et **en ce que** la soupape (V3) directionnelle barre dans la position non actionnée la communication entre la soupape (V1) d'admission et l'actionneur (10) de direction.

4. Dispositif de direction suivant l'une des revendications précédentes, **caractérisé en ce que** le groupe (12) de direction et l'agencement (14) de soupape de réglage du courant sont alimentés par un dispositif (22) d'alimentation commun.

5. Dispositif de direction suivant l'une des revendications précédentes, **caractérisé en ce que** sert à la commande de la pression loadsensing pour la pompe (24) à angle de pivotement, une autre soupape (V4) à réglage continu, qui est soumise, sur des côtés de commande opposés, d'une part à la pression de commande dans un conduit (80) de commande et d'autre part à une autre pression de commande dans un conduit (70) d'admission à la pompe (24) à angle de pivotement.

6. Dispositif de direction suivant l'une des revendications précédentes, **caractérisé en ce qu'**une soupape (V5) de limitation de la pression est raccordée au conduit (30) d'admission entre la soupape (V1) d'admission et la soupape (V3) directionnelle.

7. Dispositif de direction suivant l'une des revendications précédentes, **caractérisé en ce que** la soupape (16) respective à réglage continu est une soupape proportionnelle pouvant être commandée électromagnétiquement, en particulier la soupape (V1) d'admission et la soupape (V2) d'évacuation sont respectivement une soupape proportionnelle à 2/2 voies et l'autre soupape (V4) à réglage continu, une soupape proportionnelle à 3/2 voies.

8. Dispositif de direction suivant l'une des revendications précédentes, **caractérisé en ce que** la soupape (V3) directionnelle est une soupape (66) de commutation pouvant être actionnée électromagnétiquement, en particulier une soupape de commutation à 4/3 voies.

9. Dispositif de direction suivant l'une des revendications précédentes, **caractérisé en ce que** sur au moins un conduit pour du fluide raccordé à la soupape (V3) directionnelle, en particulier sur le conduit (30) d'admission, respectivement un dispositif (146) de détection de la pression est monté entre la soupape (V1) d'admission et la soupape (V3) directionnelle.

10. Dispositif de direction suivant l'une des revendications précédentes, **caractérisé en ce que** dans les conduits (32, 34) de communication entre la soupape (V3) directionnelle et l'actionneur (10) de direction, les conduits (50, 52) de commande du groupe (12) de direction débouchent de préférence sous la forme d'un cylindre à double effet.

11. Dispositif de direction suivant l'une des revendications précédentes, **caractérisé en ce que** le groupe (12) de direction et l'agencement (14) de soupape de réglage du courant, montés l'un avec l'autre suivant un montage hydraulique en parallèle, commandent l'actionneur (10) de direction et **en ce que** le groupe (12) de direction représente une sorte d'alimentation en courant principal et l'agencement (14) de soupape de réglage du courant, une sorte d'alimentation en courant secondaire de l'actionneur (10) de direction.

12. Dispositif hydraulique de direction comprenant un actionneur (10) de direction, qui peut être commandé par un groupe (12) de direction et comprenant un agencement (14) de soupape de réglage du courant, qui sert également à la commande de l'actionneur (10) de direction, dans lequel l'agencement (14) de soupape de réglage du courant a une soupape (V2) d'évacuation, qui est constituée en soupape (16) à réglage continu, ainsi qu'une soupape (V3) directionnelle, qui, dans sa position non actionnée, barre la communication fluidique entre la soupape (V2) d'évacuation et l'actionneur (10) de direction et, dans sa position actionnée, commande l'actionneur (10) de direction dans un sens de direction ou dans l'autre, **caractérisé en ce qu'**une soupape (V5) de limitation de la pression est montée sur un conduit (30) d'admission entre une soupape (V1) d'admission et la soupape (V3) directionnelle.
